# FASCICULE DE BREVET EUROPEEN

(11) **EP 3 679 228 B1**
(45) Date de publication et mention de la délivrance du brevet: **14.07.2021**
(21) Numéro de dépôt: 18778541.5
(22) Date de dépôt: 03.09.2018
(51) Int. Cl.: F01D 11/00, F01D 11/02, F02C 7/28, F16J 15/08, F16J 15/46, F16J 15/48

(54) **ENSEMBLE DE TURBINE À SECTEURS D'ANNEAU**
TURBINENANORDNUNG MIT RINGSEGMENTEN
TURBINE ASSEMBLY WITH RING SEGMENTS

(30) Priorité: 06.09.2017 FR 1758232
(43) Date de publication de la demande: 15.07.2020
(73) Titulaire: Safran Aircraft Engines, 75015 Paris (FR)
(72) Inventeur: LAROCHE, Clément Raphaël, 77550 Moissy-Cramayel (FR)
(74) Mandataire: Regimbeau
(86) Numéro de dépôt international: PCT/FR2018/052150
(87) Numéro de publication internationale: WO 2019/048766

(56) Documents cités:
- EP-A1- 1 099 826
- EP-A1- 1 538 306
- EP-A1- 1 586 743
- FR-A1- 2 919 345
- FR-A1- 2 955 359
- FR-A1- 2 957 115

## Description

L'invention concerne un ensemble de turbine tel que par exemple un distributeur de turbine ou une enveloppe devant entourer une roue mobile de turbine, une turbine de turbomachine munie de celui-ci et une turbomachine munie de cette turbine, notamment dans un turboréacteur d'avion ou un turbopropulseur d'avion.

De tels ensembles ont une structure annulaire comportant des secteurs reliés les uns aux autres autour d'une direction axiale allant de l'amont vers l'aval.

Le document FR-A-3 033 827 décrit un ensemble pour turbine à gaz, comportant une pluralité d'aubes fixes formant un distributeur ayant une plateforme externe pourvue de deux rebords amont et aval de liaison au stator, qui s'étendent radialement vers l'extérieur. Des faces latérales adjacentes du distributeur sont mises bout à bout et comprennent des rainures pratiquées en vis-à-vis dans les plateformes externes, et des plaquettes d'étanchéité disposées individuellement dans ces rainures.

Le document EP-A-1 099 826 décrit un ensemble de turbine selon le préambule de la revendication 1.

Le document FR-A-2 955 359 décrit un étage de turbine de turbomachine ayant entre les secteurs d'anneaux des lamelles d'étanchéité dans des fentes rectilignes longitudinales et obliques, dans la paroi longitudinale et dans les rebords de ces secteurs d'anneaux.

Le document FR-A-2 957 115 montre un étage de turbine de turbomachine, dont les plateformes externes comportent des lamelles rectilignes dans des rainures rectilignes, y compris dans leurs pattes amont et aval.

Le document EP-A-1 538 306 décrit un étage de turbine de turboréacteur ayant un secteur de distributeur 2 comportant des lamelles rectilignes dans sa partie longitudinale et dans son rebord aval.

Le document EP-A-1 586 743 décrit un anneau de turbine de turboréacteur dont les secteurs 11 d'anneau comportent des languettes rectilignes logées dans des fentes rectilignes indépendantes.

Le document FR-A-2 919 345 décrit un anneau de turbine de turbomachine, dont le secteur d'anneau comporte des lamelles logées dans des fentes rectilignes.

Un problème de ces ensembles est la fuite entre les plaquettes d'étanchéité. En effet, l'air arrivant du côté extérieur et amont de l'ensemble le long de la plate-forme externe passe entre les plaquettes d'étanchéité. Il s'ensuit une réinjection d'air très importante dans la veine de la turbine, située en aval de l'ensemble, dans le sens allant de l'extérieur vers l'intérieur.

L'invention vise à résoudre ce problème et à obtenir un ensemble de turbine évitant ou limitant les fuites entre les plaquettes d'étanchéité.

A cet effet, un premier objet de l'invention est un ensemble de turbine, comprenant une structure annulaire s'étendant circonférentiellement autour d'une direction axiale allant de l'amont vers l'aval et comportant une pluralité de secteurs d'anneau disposés circonférentiellement bout à bout, appelés secteurs d'anneau adjacents,
chaque secteur d'anneau comportant au moins une paroi s'étendant de l'amont vers l'aval et au moins un rebord, faisant saillie de la paroi dans une direction transversale, qui est sécante par rapport à la direction axiale et qui s'éloigne de la paroi,
au moins deux les secteurs d'anneau adjacents comportant des faces de raccordement adjacentes, qui sont reliées par au moins une première languette d'étanchéité, insérée dans une première rainure intérieure des faces de raccordement, et par au moins une deuxième languette d'étanchéité, insérée dans une deuxième rainure intérieure des faces de raccordement, raccordée à la première rainure intérieure,
la première languette d'étanchéité s'étendant de l'amont vers l'aval sur au moins une longueur axiale déterminée dans la paroi et la deuxième languette d'étanchéité s'étendant dans le rebord,
caractérisé en ce que
la première rainure intérieure et la deuxième rainure intérieure sont courbes, la première languette d'étanchéité et la deuxième languette d'étanchéité sont courbes dans une position de montage respectivement dans la première rainure intérieure et dans la deuxième rainure intérieure et ont un degré de liberté en flexion partant de leur position de montage en présence d'une pression d'air exercée de l'amont vers l'aval entre les faces de raccordement adjacentes des au moins deux secteurs d'anneau adjacents lors du fonctionnement de la turbine,
la deuxième languette d'étanchéité ayant au moins un deuxième point se trouvant en contact avec au moins un premier point de la première languette d'étanchéité.

Grâce à l'invention, la pression d'air qui résulte de l'écoulement d'air de l'amont vers l'aval de la veine aérodynamique lors du fonctionnement de la turbomachine appuie les languettes courbes l'une contre l'autre ce qui permet de diminuer ou supprimer d'une manière dynamique les fuites entre les languettes au niveau de l'interstice présent entre les secteurs d'anneau, et réduit le passage d'air dans la veine de l'extérieur vers l'intérieur.

Suivant un mode de réalisation de l'invention, le premier point est intermédiaire entre deux premières extrémités de la première languette d'étanchéité.

Suivant un mode de réalisation de l'invention, le premier point est situé en une première extrémité de la première languette d'étanchéité.

Suivant un mode de réalisation de l'invention, le deuxième point est intermédiaire entre deux deuxièmes extrémités de la deuxième languette d'étanchéité.

Suivant un mode de réalisation de l'invention, le deuxième point est situé à une deuxième extrémité de la deuxième languette d'étanchéité.

Suivant un mode de réalisation de l'invention, le premier point est intermédiaire entre deux premières extrémités de la première languette d'étanchéité, le deuxième point est intermédiaire entre deux deuxièmes extrémités de la deuxième languette d'étanchéité, la deuxième languette d'étanchéité étant tangente en ce deuxième point et/ou en ce premier point à la première languette d'étanchéité.

Suivant un mode de réalisation de l'invention, la première rainure intérieure et la deuxième rainure intérieure sont tangentes l'une à l'autre autour du premier point et/ou autour du deuxième point.

Suivant un mode de réalisation de l'invention, la deuxième languette d'étanchéité a une concavité tournée dans le même sens que la première languette d'étanchéité au niveau du deuxième point et du premier point.

Suivant un mode de réalisation de l'invention, la deuxième rainure intérieure a une concavité tournée dans le même sens que la première rainure intérieure au niveau du deuxième point et du premier point.

Suivant un mode de réalisation de l'invention, le premier point est situé sur un côté extérieur de la première languette d'étanchéité.

Suivant un mode de réalisation de l'invention, le premier point est situé sur un côté intérieur de la première languette d'étanchéité.

Suivant un mode de réalisation de l'invention, la première languette d'étanchéité comporte deux premières extrémités, qui sont arrondies et qui ont une première épaisseur transversale d'extrémité plus grande qu'une première épaisseur transversale intermédiaire d'une première partie intermédiaire de la première languette d'étanchéité, située entre les deux premières extrémités,
et/ou la deuxième languette d'étanchéité comporte deux deuxièmes extrémités, qui sont arrondies et qui ont une deuxième épaisseur transversale d'extrémité plus grande qu'une deuxième épaisseur transversale intermédiaire d'une deuxième partie intermédiaire de la deuxième languette d'étanchéité, située entre les deux deuxièmes extrémités. On évite ainsi l'usure.

Suivant un mode de réalisation de l'invention, la première languette d'étanchéité et la deuxième languette d'étanchéité sont précontraintes dans leur position de montage respectivement dans la première rainure intérieure et dans la deuxième rainure intérieure. Cela améliore l'étanchéité par comblement des jeux.

Suivant un mode de réalisation de l'invention, la première rainure intérieure débouche dans un premier côté amont des secteurs d'anneau et dans un premier côté aval des secteurs d'anneau en plus de déboucher dans leur face de raccordement, tandis que la deuxième rainure intérieure débouche dans un deuxième côté amont ou aval du rebord des secteurs d'anneau en plus de déboucher dans leur face de raccordement.

Suivant un mode de réalisation de l'invention, une autre deuxième languette d'étanchéité est insérée dans une autre deuxième rainure intérieure du rebord, située dans les faces de raccordement et raccordée à la deuxième rainure intérieure,
l'autre deuxième rainure intérieure étant courbe, l'autre deuxième languette d'étanchéité étant courbe dans une position de montage respectivement dans l'autre deuxième rainure intérieure et a un degré de liberté en flexion partant de sa position de montage en présence d'une pression d'air exercée de l'amont vers l'aval entre les faces de raccordement adjacentes des au moins deux secteurs d'anneau adjacents lors du fonctionnement de la turbine,
l'autre deuxième languette d'étanchéité ayant au moins un troisième point se trouvant en contact avec au moins un quatrième point de la deuxième languette d'étanchéité.

Suivant un mode de réalisation de l'invention, l'ensemble de turbine fait partie d'une enveloppe de carter de turbine, destinée à entourer une roue mobile de turbine.

Suivant un mode de réalisation de l'invention, la première languette d'étanchéité présente un point d'inflexion entre ses premières extrémités et/ou la deuxième languette d'étanchéité présente un point d'inflexion entre ses deuxièmes extrémités. Cela limite les perturbations du flux principal.

Suivant un mode de réalisation de l'invention, la structure annulaire fait partie d'un distributeur de turbine, la deuxième rainure intérieure débouche dans une zone saillante aval d'appui circonférentiel du rebord des secteurs d'anneau en plus de déboucher dans leur face de raccordement,
l'ensemble de turbine comporte en outre une bride de carter, qui est situé en aval de la zone saillante aval d'appui circonférentiel et contre lequel la zone saillante aval d'appui circonférentiel est en appui,
la bride de carter comportant des secteurs de bride disposés circonférentiellement bout à bout autour de de la direction axiale, appelés secteurs de bride adjacents, en face des secteurs d'anneau,
au moins deux des secteurs de bride adjacents comportant des deuxièmes faces de raccordement adjacentes, qui sont reliées par au moins une troisième languette d'étanchéité, insérée dans une troisième rainure intérieure des deuxièmes faces de raccordement,
la troisième rainure intérieure débouchant dans un côté amont des deuxièmes faces de raccordement et étant située en face de la deuxième rainure intérieure et en face de la zone saillante aval d'appui circonférentiel,
la deuxième languette d'étanchéité comporte une deuxième extrémité se trouvant en contact avec une troisième extrémité de la troisième languette d'étanchéité. Cela améliore l'étanchéité entre la bride de carter et le distributeur grâce à la languette d'étanchéité qui s'étend à travers les deux éléments.

Suivant un mode de réalisation de l'invention, la deuxième extrémité dépasse en aval de la zone saillante aval d'appui circonférentiel et/ou la troisième extrémité dépasse vers l'amont du côté amont des deuxièmes faces de raccordement.

Suivant un mode de réalisation de l'invention, il est prévu comme paroi une paroi intérieure s'étendant de l'amont vers l'aval,
il est prévu comme rebord un rebord intérieur raccordé à l'intérieur de la paroi intérieure.

Suivant un mode de réalisation de l'invention, il est prévu comme paroi une paroi extérieure s'étendant de l'amont vers l'aval,
il est prévu comme rebord un rebord extérieur raccordé à l'extérieur de la paroi extérieure.

L'invention sera mieux comprise à la lecture de la description qui va suivre, donnée uniquement à titre d'exemple non limitatif en référence aux dessins annexés, sur lesquels :
- la figure 1 représente une vue schématique en perspective d'un ensemble de turbine, vu depuis l'aval, suivant un mode de réalisation de l'invention,
- la figure 2 représente une vue schématique de face d'une partie d'un ensemble de turbine, vu depuis l'amont, suivant un mode de réalisation de l'invention,
- la figure 3 représente une vue schématique de côté d'un secteur d'anneau d'un ensemble de turbine dans une première position de montage, suivant un premier mode de réalisation de l'invention,
- la figure 4 représente une vue schématique de côté d'un secteur d'anneau d'un ensemble de turbine dans une deuxième position de flexion en fonctionnement, suivant le premier mode de réalisation de l'invention selon la figure 3,
- la figure 5 représente une vue schématique de côté agrandie des rainures d'un secteur d'anneau d'un ensemble de turbine, suivant le premier mode de réalisation de l'invention selon la figure 3,
- la figure 6 représente une vue schématique de côté d'un secteur d'anneau d'un ensemble de turbine dans une première position de montage, suivant un deuxième mode de réalisation de l'invention,
- la figure 7 représente une vue schématique de côté d'un secteur d'anneau d'un ensemble de turbine dans une deuxième position de flexion en fonctionnement, suivant un troisième mode de réalisation de l'invention,
- la figure 8 représente une vue schématique de côté agrandie d'une partie du secteur d'anneau dans une première position de montage, suivant le troisième mode de réalisation de l'invention selon la figure 7,
- les figures 9, 10 et 11 représente des vues schématiques de côté agrandies de languettes dans leur position de montage dans leur rainure de l'ensemble, suivant des modes de réalisation de l'invention,
- la figure 12 représente une vue schématique de côté agrandie de face d'une partie d'un ensemble de turbine, vu depuis l'amont, suivant un mode de réalisation de l'invention,
- la figure 13 représente une vue schématique en perspective d'une languette d'un ensemble de turbine, suivant un troisième mode de réalisation de l'invention.

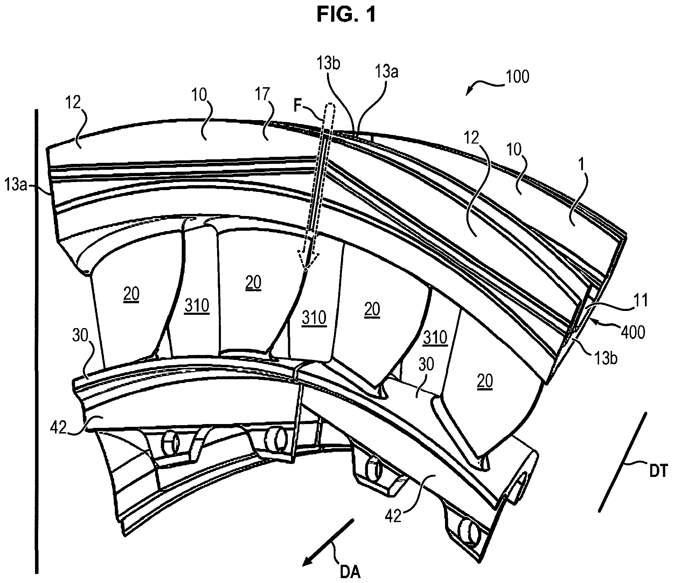

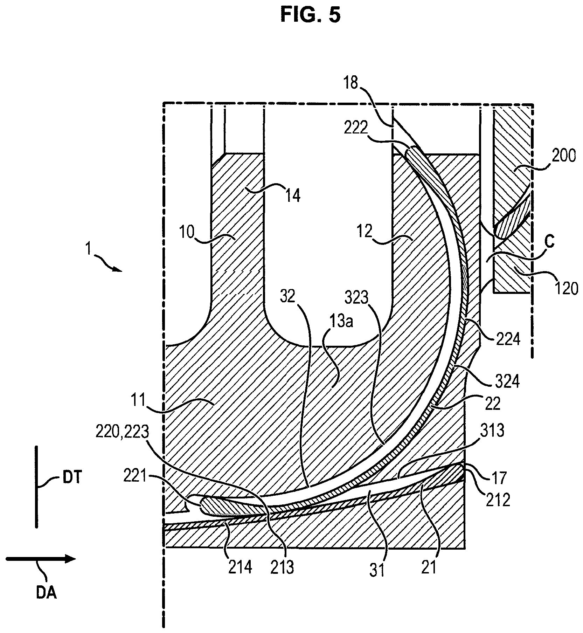

Aux figures 1 à 6, l'ensemble 1 de turbine comprend une structure annulaire 400 s'étendant circonférentiellement autour d'une direction axiale DA allant de l'amont vers l'aval. L'ensemble1 comporte des secteurs 10 d'anneau disposés circonférentiellement bout à bout, qui forment la structure annulaire 400 autour de la direction axiale DA. Chaque secteur 10 d'anneau occupe par exemple une partie d'un cercle autour de la direction axiale DA.

Chaque secteur 10 d'anneau comporte au moins une paroi 11, 30 s'étendant de l'amont vers l'aval et au moins un rebord 12, 42, faisant saillie de la paroi 11, 30 dans une direction transversale DT. La direction transversale DT est sécante par rapport à la direction axiale DA et s'éloigne de la paroi 11, 30. Cette direction transversale DT peut être par exemple perpendiculaire à la direction axiale DA.

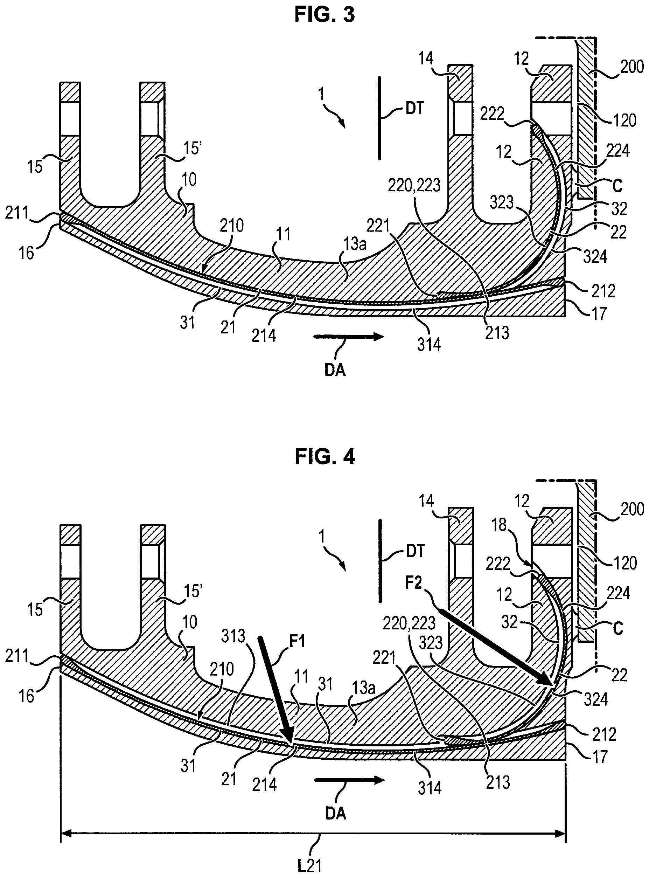

Au moins deux de ces secteurs d'anneau sont disposés bout à bout et sont appelés secteurs d'anneau adjacents. Par exemple, chaque secteur 10 d'anneau peut comporter une paroi extérieure longitudinale 11 11 (ou plateforme extérieure 11 ou plateforme extérieure hors veine) s'étendant de l'amont vers l'aval et au moins un rebord extérieur 12, 15 raccordé à l'extérieur de la paroi extérieure 11, et pouvant par exemple être en saillie radiale sur cette paroi extérieure 11. Chaque secteur 10 d'anneau peut comporter par exemple un rebord extérieur 12, dit rebord aval 12, raccordé à l'extérieur de la paroi extérieure 11 et situé en aval d'un autre rebord extérieur 15, dit rebord amont 15, lequel est également raccordé à l'extérieur de la paroi extérieure 11, ainsi que représenté aux figures 3 à 8.

Par exemple, chaque secteur 10 d'anneau peut comporter une paroi intérieure 30 (ou plateforme intérieure 30 ou plateforme intérieure 30 hors veine) s'étendant de l'amont vers l'aval, et un rebord intérieur 42 raccordé à l'intérieur de la paroi intérieure 30, ainsi que représenté à la figure 1.

Ce qui suit (rainures 31, 32, 33, languettes 21, 22, 23, 24) peut être prévu pour la paroi extérieure longitudinale 11 et son rebord extérieur 12, ainsi que représenté aux figures 3 à 8, et/ou pour la paroi intérieure 30 et son rebord intérieur 42, ainsi que représenté à la figure 1.

L'ensemble 1 de turbine peut faire partie d'un distributeur de turbine. Dans ce cas, chaque secteur peut comporter une ou plusieurs aube(s) fixe(s) 20 fixée(s) entre la paroi extérieure longitudinale 11 (ou plate-forme externe 11) et une paroi intérieure longitudinale 30 (ou plate-forme interne), ainsi que représenté à la figure 1.

Suivant un mode de réalisation, l'ensemble 1 de turbine fait partie d'une turbine 100 de turbomachine. La turbine 100 de turbomachine comporte un carter extérieur 200 (ou entretoise), une aube mobile et un distributeur placé en amont de l'aube montée mobile en rotation autour de la direction axiale DA dans le carter extérieur 200. Suivant un mode de réalisation, le distributeur 1 de turbine comporte ou est formé par l'ensemble 1 de turbine. Suivant un autre mode de réalisation, une enveloppe faisant partie du carter de turbine et entourant l'aube mobile de turbine peut être formée par ou comporter l'ensemble 1 de turbine. Suivant un autre mode de réalisation, la turbine 100 de turbomachine comporte un carter extérieur 200 comportant cette enveloppe 120 de carter de turbine, une aube mobile, entourée par l'enveloppe 120 de carter de turbine, et un autre distributeur de turbine placé en amont de l'aube montée mobile en rotation autour de la direction axiale DA dans le carter extérieur 200.

Suivant un mode de réalisation, le distributeur 1 de turbine peut être un distributeur haute pression de la turbine 100, c'est-à-dire un distributeur de la turbine haute pression 100 (ou module haute pression) de la turbomachine. Le module haute-pression est agencé en sortie d'une chambre de combustion de la turbomachine et en amont d'un module basse pression, comportant un ou plusieurs étages basse pression comportant chacun un autre distributeur basse pression porté par le carter de la turbine et une roue mobile située en aval de cet autre distributeur basse pression. La turbine 100 peut faire partie d'un turboréacteur d'avion ou d'un turbopropulseur d'avion. La roue mobile et l'aube mobile sont fixées à un arbre de turbine s'étendant suivant la direction axiale DA et sont aptes à tourner dans un sens de rotation autour de cette direction axiale DA lors du fonctionnement de la turbine 100. Les directions radiales sont prises dans un plan transversal à la direction axiale DA et partent de cette direction axiale DA, en étant orientées d'une manière centrifuge de l'intérieur vers l'extérieur. Le carter 200 entoure l'aube mobile autour de la direction axiale DA. Une veine 310 d'écoulement de gaz est délimitée entre la paroi extérieure 11, la paroi intérieure 30 et les aubes fixes 20. Bien entendu, le distributeur 1 de turbine suivant l'invention peut être un distributeur basse pression de la turbine 100, c'est-à-dire un distributeur du module basse pression de la turbomachine.

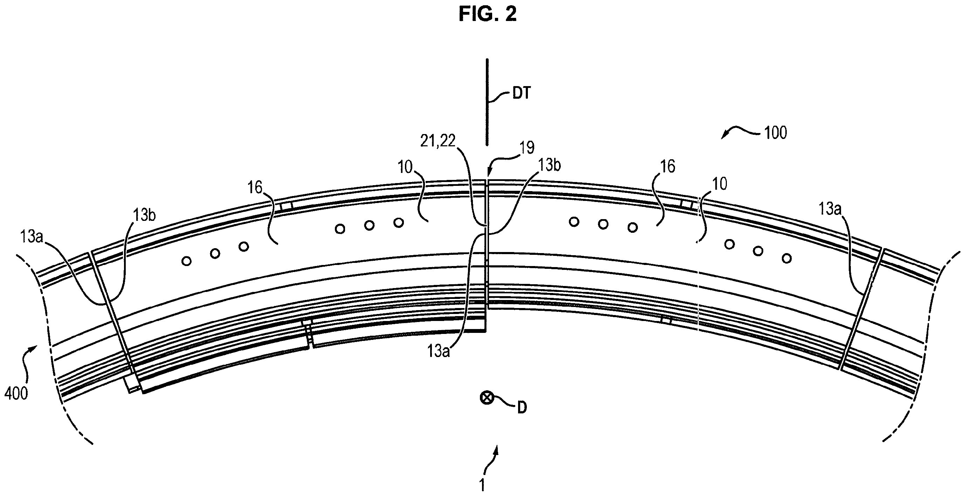

Suivant l'invention, chaque secteur 10 d'anneau est délimité circonférentiellement par ses deux faces 13a et 13b de raccordement, ainsi que représenté aux figures 1 et 2. Ainsi que représenté aux figures 3 à 13, au moins certains des secteurs 10 d'anneau disposés bout à bout, c'est-à-dire circonférentiellement adjacents, ont leurs faces 13a, 13b de raccordement adjacentes, qui sont reliées par au moins une première languette 21 d'étanchéité courbe, insérée dans une première rainure intérieure courbe 31 des faces 13a, 13b de raccordement, et par au moins une deuxième languette 22 d'étanchéité courbe, insérée dans une deuxième rainure intérieure courbe 32 des faces 13a, 13b de raccordement. La deuxième rainure intérieure courbe 32 est raccordée à la première rainure intérieure courbe 31. Il peut être prévu une ou plusieurs autre(s) deuxièmes languettes d'étanchéité, c'est-à-dire autre(s) que la deuxième languette 22 d'étanchéité, dans d'autres rainures intérieures correspondantes, comme par exemple la languette 23 d'étanchéité ci-dessous. Cette ou ces autre(s) deuxièmes languettes d'étanchéité peuvent avoir une forme analogue à la deuxième languette 22 d'étanchéité et être en contact l'une contre l'autre, d'une manière analogue aux languettes 21 et 22. Ce qui est décrit est également valable pour la ou les languette(s) d'étanchéité autres que la première languette 21 d'étanchéité et que la deuxième languette 22 d'étanchéité.

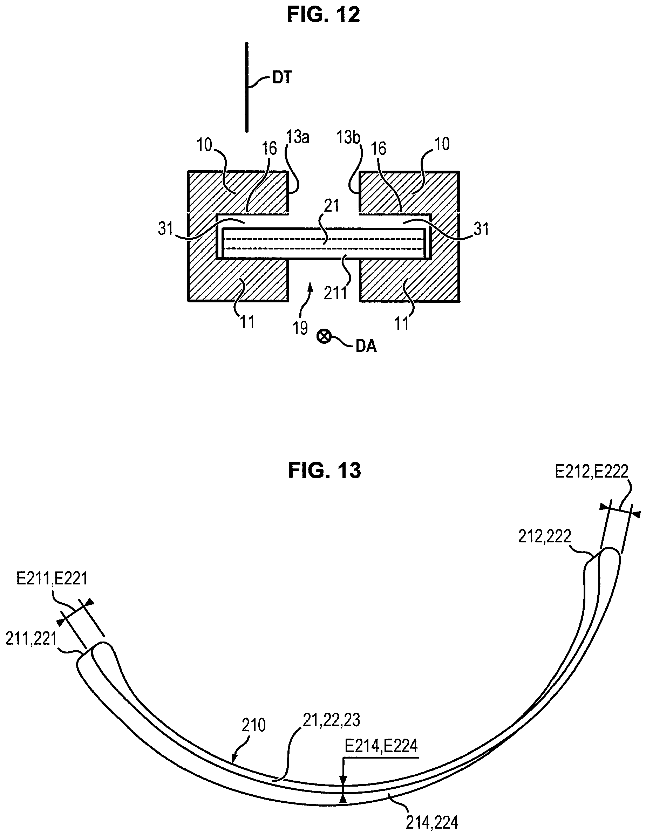

Ainsi, au moins deux secteurs 10 d'anneau adjacents circonférentiellement (comme par exemple représenté aux figures 2 et 12) sont reliés entre eux par les languettes 21, 22 d'étanchéité courbes insérées respectivement dans les rainures intérieures 31, 32 de leur face 13a, 13b de raccordement disposées en vis-à-vis l'une de l'autre. Ainsi que représenté à la figure 12, la première languette 21 d'étanchéité et ses premières extrémités 211, 212 sont insérées dans la première rainure 31 des deux secteurs 10 d'anneau adjacents, c'est-à-dire circonférentiellement en vis-à-vis l'un de l'autre, et enjambe l'intervalle 19 situé entre les faces de raccordement 13a et 13b circonférentiellement en vis-à-vis l'un de l'autre et donc fait la jonction entre les bords des secteurs 10 d'anneau en vis-à-vis l'un de l'autre. La deuxième languette 22 d'étanchéité et ses deuxièmes extrémités 221, 222 sont insérées dans la deuxième rainure 32 des deux secteurs 10 d'anneau adjacents, c'est-à-dire circonférentiellement en vis-à-vis l'un de l'autre, et enjambe l'intervalle 19 situé entre leur face de raccordement 13a et 13b circonférentiellement en vis-à-vis l'un de l'autre. Cette liaison par languettes 21, 22 d'étanchéité courbes peut être prévue entre deux secteurs d'anneau d'une ou plusieurs paires de secteurs d'anneau adjacents circonférentiellement les uns à la suite des autres, de toutes les paires de secteurs d'anneau adjacents circonférentiellement, ou de certaines paires de secteurs d'anneau adjacents circonférentiellement.

La première languette 21 d'étanchéité courbe s'étend de l'amont vers l'aval sur au moins une longueur axiale déterminée L21 dans la paroi extérieure longitudinale 11. La deuxième languette 22 d'étanchéité courbe s'étend dans le rebord 12. Chaque languette d'étanchéité a une certaine étendue dans la direction circonférentielle, normale aux directions DA et DT.

La première languette 21 d'étanchéité et la deuxième languette 22 d'étanchéité (et éventuellement la ou les autres deuxième(s) languette(s) d'étanchéité 23 décrites ci-dessous insérée(s) dans la ou les rainure(s) intérieure(s) 33) sont courbes dans une première position de montage (représentée aux figures 3, 6 et 8) respectivement dans la première rainure intérieure 31 et dans la deuxième rainure intérieure 32.

La deuxième languette 22 d'étanchéité a au moins un deuxième point 220 se trouvant en contact avec un premier point 213 de la première languette 21 d'étanchéité. Par exemple, le premier point 213 peut être situé sur un côté extérieur 210 de la première languette 21 d'étanchéité entre deux premières extrémités 211, 212 de la première languette 21 d'étanchéité ou sur un côté intérieur de la première languette 21 d'étanchéité entre deux premières extrémités 211, 212 de la première languette 21 d'étanchéité ou sur un côté latéral de la première languette 21 d'étanchéité, et ce dans la position de montage et dans la deuxième position de flexion en fonctionnement, décrite ci-dessous. Ainsi que représenté aux figures 3 à 8, le premier point 213 peut être intermédiaire entre les deux premières extrémités 211, 212 de la première languette 21 d'étanchéité. Le premier point 213 pourrait également être en l'une des deux premières extrémités 211, 212 de la première languette 21 d'étanchéité.

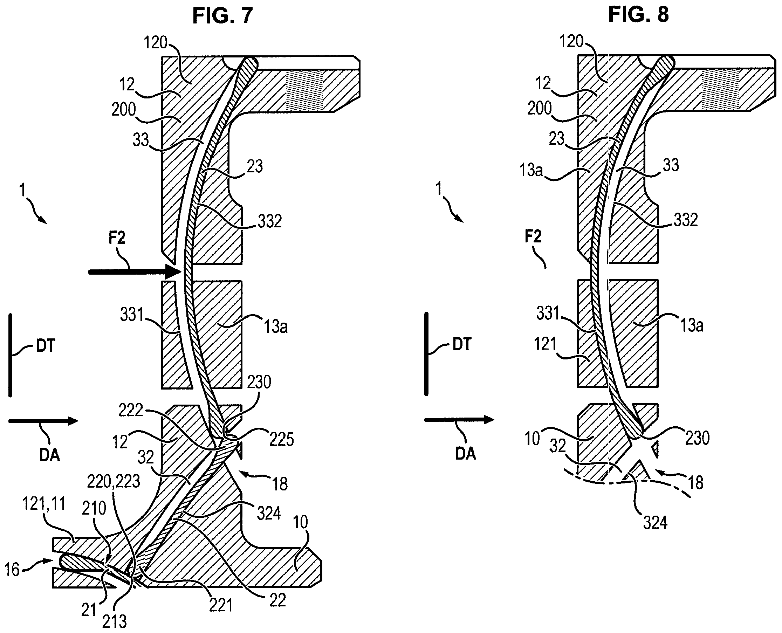

Lors du fonctionnement du distributeur 1, une pression d'air exercée de l'amont vers l'aval entre les faces 13a, 13b de raccordement adjacentes des secteurs 10 d'anneau adjacents. La première languette 21 d'étanchéité et la deuxième languette 22 d'étanchéité ont un degré de liberté en flexion dans leur rainure respective 31, 32 (ainsi que représenté aux figures 4 et 7) en partant de cette première position de montage en présence de cette pression d'air. La deuxième languette 22 d'étanchéité est ainsi apte à fléchir dans la deuxième rainure 32 jusqu'à une deuxième position de flexion où le point 220 de contact est poussé contre la première languette 21 d'étanchéité, par exemple contre le côté extérieur 210. Il s'ensuit une extension de la deuxième languette 22 dans la rainure 32 contre la première languette 21. On augmente ainsi d'une manière dynamique le contact étanche entre la première languette 21 et la deuxième languette 22 dans l'intervalle 19 situé entre les faces 13a et 13b des secteurs d'anneau adjacents lors du fonctionnement du distributeur 1.

Ainsi, lorsque, lors du fonctionnement du distributeur, de l'air sous pression est envoyé de l'amont vers l'aval entre les secteurs d'anneau 10 ainsi que représenté par les flèches F1 et F2 aux figures 4 et 7, la deuxième languette 22 est poussée par cette pression d'air de sa première position de montage à sa deuxième position de flexion en fonctionnement vers le fond de la rainure et contre la première languette 21. Le point 220 de contact déplace alors la première languette 21 d'étanchéité vers le fond de la première rainure 31 vers l'intérieur. Ainsi l'air sous pression renforce le contact de la deuxième languette 22 sur la première languette 21 lors du fonctionnement du distributeur 1 et donc augmente l'étanchéité entre la deuxième languette 22 sur la première languette 21 au niveau du point de contact 220 touchant le point 213. Cela permet également de maîtriser le positionnement des languettes l'une contre l'autre en fonctionnement et d'éviter que des languettes soient perdues lors du fonctionnement du distributeur, en évitant qu'en fonctionnement il y ait un interstice entre les languettes.

La première position de montage correspond par exemple à une position de contraction de la languette 21 ou 22 ou 23 dans sa rainure 31 ou 32 ou 33. La deuxième position de flexion en fonctionnement correspond par exemple à une position d'extension de la languette 21 ou 22 ou 23 dans sa rainure 31 ou 32 ou 33. La longueur de l'arc interne de la languette 21 ou 22 ou 23 est par exemple supérieure à la longueur du côté d'appui 313 ou 314 ou 323 ou 324 ou 331 ou 332 de la rainure 31 ou 32 ou 33, dans laquelle cette languette 21 ou 22 ou 23 se trouve.

Dans la position de montage de la figure 3, la première languette 21 d'étanchéité se trouve par exemple contre le côté extérieur 313 de la première rainure intérieure 31, et la deuxième languette 22 d'étanchéité se trouve par exemple contre le côté extérieur et/ou amont 323 de la deuxième rainure intérieure 32. Dans la deuxième position de flexion en fonctionnement de la figure 4, la première languette 21 d'étanchéité se trouve par exemple contre le côté intérieur 314 de la première rainure intérieure 31, et la deuxième languette 22 d'étanchéité se trouve par exemple contre le côté intérieur et/ou aval 324 de la deuxième rainure intérieure 32.

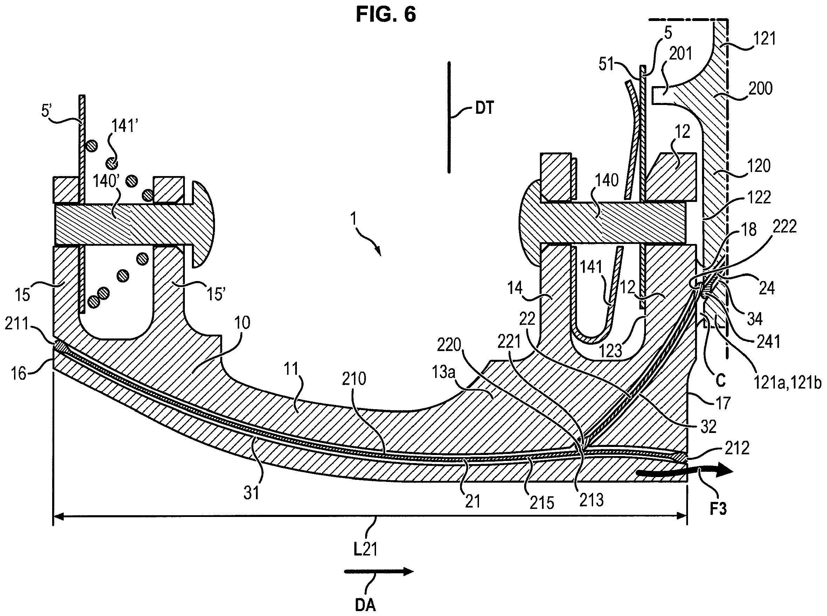

Dans les modes de réalisation représentés aux figures 6 à 8, le point 220 de contact est situé à une deuxième extrémité 221 de la deuxième languette 22 d'étanchéité.

Dans le mode de réalisation représenté aux figures 3, 4 et 5, le point 220 de contact est situé en au moins un deuxième point intermédiaire 223 de la deuxième languette 22 d'étanchéité, située entre deux deuxièmes extrémités 221, 222 de la deuxième languette 22 d'étanchéité. La deuxième languette 22 d'étanchéité courbe est tangente en ce deuxième point intermédiaire 223 et en ce point 220 de contact à la première languette 21 courbe d'étanchéité, par exemple à chaud. La première rainure intérieure 31 et la deuxième rainure intérieure 32 sont tangentes l'une à l'autre autour du premier point 213 et/ou autour du deuxième point 223. On effectue ainsi un contact sur une plus grande surface entre la deuxième languette 22 d'étanchéité et la première languette 21 d'étanchéité. Par exemple, la deuxième languette 22 d'étanchéité a une concavité tournée dans le même sens que la première languette 21 d'étanchéité au niveau du deuxième point intermédiaire 223 et du premier point intermédiaire 213 (concavité tournée vers l'extérieur pour les languettes 21 et 22 des figures 3 et 4, concavité tournée vers l'intérieur pour les languettes 21 et 22 de la figure 7). La deuxième rainure intérieure 32 a une concavité tournée dans le même sens que la première rainure intérieure 31 au niveau du deuxième point intermédiaire 223 et du premier point intermédiaire 213 (concavité tournée vers l'extérieur pour les rainures 31 et 32 des figures 3 et 4, concavité tournée vers l'intérieur pour les rainures 31 et 32 de la figure 7).

Dans le mode de réalisation représenté aux figures 6, 7, 8, le point 220 de contact est situé en une deuxième extrémité 221 de la deuxième languette 22 d'étanchéité.

Dans les modes de réalisation représentés aux figures 3 à 13, les deux premières extrémités 211, 212 de la première languette 21 d'étanchéité ont une première épaisseur transversale E211, E212 d'extrémité plus grande qu'une première épaisseur transversale intermédiaire E214 d'une première partie intermédiaire 214 de la première languette 21 d'étanchéité, située entre les deux premières extrémités 211, 212, et sont par exemple arrondies. La deuxième languette 22 d'étanchéité comporte deux deuxièmes extrémités 221, 222, qui ont une deuxième épaisseur transversale E221, E222 d'extrémité plus grande qu'une deuxième épaisseur transversale intermédiaire E224 d'une deuxième partie intermédiaire 224 de la deuxième languette 22 d'étanchéité, située entre les deux deuxièmes extrémités 221, 222 et qui sont par exemple arrondies. Un exemple de languette, pouvant être la languette 21 ou 22 ou 23, est représenté à la figure 13 et comporte des premières extrémités 211, 212 ou des deuxièmes extrémités 221, 222 transversalement cylindriques, par exemple circulaires. Cela permet de limiter l'usure des languettes 21, 22 par contact entre elles, en assurant un contact du type cylindre contre plan entre le point 220 de contact et le premier point 213. La première partie intermédiaire 214 et la deuxième partie intermédiaire 224 sont courbes. La courbure permet ainsi de s'adapter à la forme des secteurs d'anneau.

Dans un mode de réalisation, la première languette 21 d'étanchéité et la deuxième languette 22 d'étanchéité sont précontraintes dans leur position de montage respectivement dans la première rainure intérieure 31 et dans la deuxième rainure intérieure 32. La précontrainte a pour effet d'améliorer l'étanchéité, car elle favorise le comblement des jeux entre languette et rainure. Bien entendu, cette caractéristique est facultative.

Dans les modes de réalisation représentés aux figures 3 à 12, la première rainure intérieure 31 débouche dans un premier côté amont 16 des secteurs 10 d'anneau et dans un premier côté aval 17 des secteurs 10 d'anneau en plus de déboucher dans leur face 13a, 13b de raccordement, la languette 21 étant ainsi traversante dans sa rainure 31. La deuxième rainure intérieure 32 débouche dans un deuxième côté 18 du rebord 12 des secteurs 10 d'anneau en plus de déboucher dans leur face 13a, 13b de raccordement. Aux figures 3 à 5, le deuxième côté 18 est un deuxième côté amont 18 du rebord 12. Aux figures 6 à 8, le deuxième côté 18 est un deuxième côté aval du rebord 12. Cela permet de surmonter les difficultés de montage des languettes dues à leur faible épaisseur.

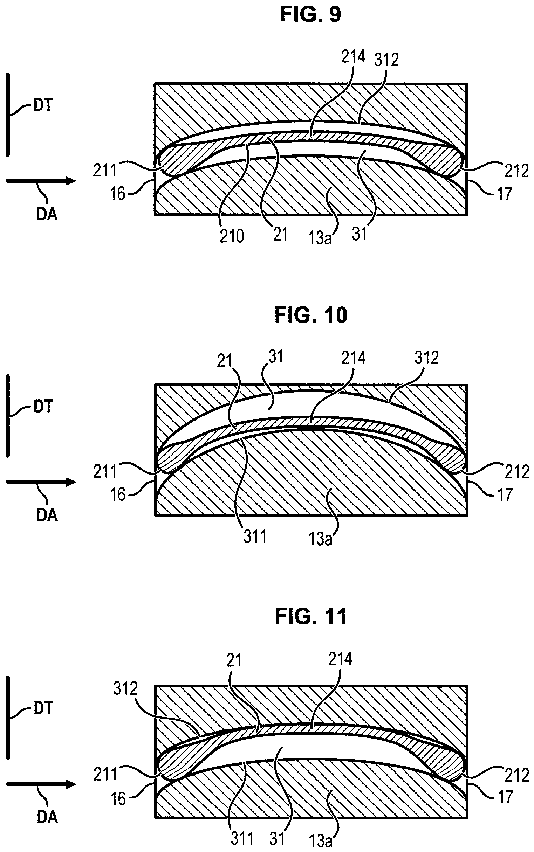

La première languette 21 d'étanchéité peut par exemple être centrée dans la première rainure 31, ainsi que représenté à la figure 9. La première languette 21 d'étanchéité peut par exemple être tangente par sa première partie intermédiaire 214 contre la courbure interne 311 de la première rainure 31, ainsi que représenté à la figure 10. La première languette 21 d'étanchéité peut par exemple être tangente par sa première partie intermédiaire 214 contre la courbure externe 312 de la première rainure 31, ainsi que représenté à la figure 11.

Dans le mode de réalisation représenté aux figures 7 et 8, une autre deuxième languette d'étanchéité 23 est insérée dans une autre deuxième rainure intérieure 33 du rebord 12, située dans les faces de raccordement 13a et 13b circonférentiellement en vis-à-vis l'un de l'autre des secteurs 10 d'anneau adjacents. Cette autre deuxième rainure intérieure 33 est raccordée à la deuxième rainure intérieure 32. Cette autre deuxième rainure intérieure 33 est courbe. L'autre deuxième languette 23 d'étanchéité a au moins un troisième point 230 se trouvant en contact avec au moins un quatrième point 225 de la deuxième languette 22 d'étanchéité. Par exemple, cet ensemble 1 de turbine fait partie d'une enveloppe 200, 120 de carter de turbine (ou entretoise), destinée à entourer une roue mobile de turbine. Le troisième point 230 de contact est situé par exemple en la deuxième extrémité 222 de la deuxième languette 22 d'étanchéité et/ou sur un côté extérieur 220 de la deuxième languette 22 d'étanchéité. L'autre deuxième languette 23 d'étanchéité est courbe (et peut être par exemple précontrainte ou non précontrainte dans sa position de montage représentée à la figure 8) respectivement dans l'autre deuxième rainure intérieure 33 et a un degré de liberté en flexion partant de cette position de montage en présence d'une pression d'air (représentée par la flèche F2 à la figure 7) exercée de l'amont vers l'aval entre les faces 13a, 13b de raccordement adjacentes des secteurs 10 d'anneau lors du fonctionnement de la turbine. Ainsi, en présence de cette pression d'air en fonctionnement, l'autre deuxième languette 23 d'étanchéité appuie vers l'intérieur sur la deuxième languette 22 d'étanchéité, appuyant elle-même vers l'intérieur sur la première languette 21 d'étanchéité. Dans la position de montage de la figure 8, l'autre deuxième languette 23 d'étanchéité se trouve par exemple contre le côté amont 331 de l'autre deuxième rainure intérieure 33. Dans la deuxième position de flexion en fonctionnement de la figure 7, l'autre deuxième languette 23 d'étanchéité se trouve par exemple contre le côté aval 332 de l'autre deuxième rainure intérieure 33, la deuxième languette 22 d'étanchéité se trouve par exemple contre le côté intérieur et/ou aval 324 de la deuxième rainure intérieure 32.

Dans le mode de réalisation représenté à la figure 6, la première languette 21 d'étanchéité présente un point 215 d'inflexion entre ses premières extrémités 211, 212. La languette 21 cumule extension et rétractation (double courbure), ce qui permet aussi de donner un profil aérodynamique pour l'air de veine (Flèche F3) et de limiter ainsi les perturbations du flux principal. La deuxième languette 22 d'étanchéité pourrait également présenter un point d'inflexion entre ses deuxièmes extrémités 221, 222.

Dans le mode de réalisation représenté à la figure 6, la structure annulaire 400 fait partie d'un distributeur de turbine. La deuxième rainure intérieure 32 débouche dans une zone saillante aval C d'appui circonférentiel (appelée en anglais « dutch barn ») du rebord 12 des secteurs 10 d'anneau, en plus de déboucher dans leur face 13a, 13b de raccordement. Cette zone saillante aval C d'appui circonférentiel est située dans le deuxième côté aval du rebord 12. L'ensemble 1 de turbine comporte en outre une bride 120 de carter, qui est situé en aval de la zone saillante aval C d'appui circonférentiel et qui est configurée pour porter un anneau de roue mobile. La zone saillante aval C d'appui circonférentiel est en appui contre la bride 120 de carter. La bride 120 de carter comporte par exemple des secteurs 121 de bride, disposés circonférentiellement bout à bout autour de la direction axiale DA en face des secteurs 10 d'anneau, ces secteurs 121 de bride étant appelés secteurs de bride adjacents. Au moins deux des secteurs 121 de bride adjacents comportent des deuxièmes faces de raccordement 121a, 121b adjacentes, qui sont reliées par au moins une troisième languette 24 d'étanchéité, insérée dans une troisième rainure intérieure 34 des deuxièmes faces de raccordement 121a, 121b. La troisième rainure intérieure 34 débouche dans un côté amont 122 de la bride 120 de carter. La troisième rainure intérieure 34 est située en face de la deuxième rainure intérieure 32 et en face de la zone saillante aval C d'appui circonférentiel. La deuxième languette 22 d'étanchéité comporte une deuxième extrémité 222 se trouvant en contact avec une troisième extrémité 241 de la troisième languette 24 d'étanchéité à proximité de la zone saillante aval C d'appui circonférentiel. Par exemple, la deuxième extrémité 222 dépasse en aval de la zone saillante aval C d'appui circonférentiel et/ou la troisième extrémité 241 dépasse vers l'amont du côté amont 122 de la bride 120 de carter. Cela permet également de rendre étanche la zone saillante aval C d'appui circonférentiel entre les secteurs 10 d'anneau, qui dans l'état de la technique aurait été soumise à des fuites d'air, ainsi que représenté par la flèche F de la figure 1 et par le cercle C à la figure 6. On évite ainsi les fuites entre cette zone saillante aval C d'appui circonférentiel et la bride 120 de carter.

Aux figures 3 à 6, suivant un mode de réalisation, chaque secteur 10 d'anneau peut comporter une ou plusieurs patte(s) extérieure(s) intermédiaire(s) 14, par exemple radiale, présente(s) en amont du rebord extérieur aval 12, et en aval du rebord extérieur amont 15, qui s'étendent seulement en face d'une partie de la circonférence couverte par le rebord extérieur aval 12 autour de la direction axiale DA. Il est par exemple prévu plusieurs pattes extérieures intermédiaires 14, qui sont espacées circonférentiellement l'une de l'autre et sont par exemple radiales. Cette ou ces patte(s) extérieure(s) intermédiaire(s) 14 laissent donc à côté d'elle(s) à l'extérieur de chaque secteur 10 d'anneau un passage axial pour l'air face au rebord extérieur aval 12. De même, il peut être prévu en aval un rebord extérieur amont 15 et en amont de la ou des pattes 14 un troisième rebord 15' extérieur.

Suivant un mode de réalisation, la ou les patte(s) extérieure(s) intermédiaire(s) 14 servent à fixer un ou plusieurs organe(s) 140 de fixation, comme par exemple une vis ou boulon 140 (pouvant être vissé dans un taraudage de cette ou ces patte(s) extérieure(s) intermédiaire(s) 14), pour fixer une ou des lamelle(s) 5 d'étanchéité ou une collerette 5 annulaire d'étanchéité contre une face amont 123 du rebord 12. L'organe 140 de fixation peut être en appui contre ou traverser la ou les lamelle(s) 5 d'étanchéité ou la collerette 5 annulaire d'étanchéité contre le rebord 12. Une ou plusieurs pièce(s) 141 de ressort, par exemple coudées en U, peuvent être logées entre cette ou ces patte(s) extérieure(s) intermédiaire(s) 14 d'une part et le rebord 12 d'autre part, et être en compression de l'amont vers l'aval contre la face amont 51 de la ou des lamelle(s) 5 d'étanchéité ou de la collerette périphérique 5 d'étanchéité. Un ou plusieurs organe(s) 140' de fixation analogue(s) à l'organe 140 de fixation et une ou plusieurs pièce(s) 141' de ressort analogue(s) à la ou aux pièce(s) 141 de ressort, peuvent être prévu également sur le rebord 15' extérieur pour fixer une ou plusieurs autre(s) lamelle(s) 5' d'étanchéité ou une autre collerette 5' annulaire d'étanchéité contre la face aval du troisième rebord 15 extérieur. La collerette 5 et/ou 5' annulaire d'étanchéité entoure par exemple les secteurs 10 d'anneau autour de la direction axiale DA.

Bien entendu, les modes de réalisation, caractéristiques et exemples ci-dessus peuvent être combinés l'un avec l'autre ou être sélectionnés indépendamment l'un de l'autre.

## Revendications

1. Ensemble (1) de turbine, comprenant une structure annulaire (400) s'étendant circonférentiellement autour d'une direction axiale (DA) allant de l'amont vers l'aval et comportant une pluralité de secteurs (10) d'anneau disposés circonférentiellement bout à bout, appelés secteurs (10) d'anneau adjacents,
chaque secteur (10) d'anneau comportant au moins une paroi (11, 30) s'étendant de l'amont vers l'aval et au moins un rebord (12, 42), faisant saillie de la paroi (11, 30) dans une direction transversale (DT), qui est sécante par rapport à la direction axiale (DA) et qui s'éloigne de la paroi (11, 30),
au moins deux secteurs (10) d'anneau adjacents comportant des faces (13a, 13b) de raccordement adjacentes, qui sont reliées par au moins une première languette (21) d'étanchéité, insérée dans une première rainure intérieure (31) des faces (13a, 13b) de raccordement, et par au moins une deuxième languette (22) d'étanchéité, insérée dans une deuxième rainure intérieure (32) des faces (13a, 13b) de raccordement, raccordée à la première rainure intérieure (31),
la première languette (21) d'étanchéité s'étendant de l'amont vers l'aval sur au moins une longueur axiale déterminée (L21) dans la paroi (11, 30) et la deuxième languette (22) d'étanchéité s'étendant dans le rebord (12, 42),
**caractérisé en ce que**
la première rainure intérieure (31) et la deuxième rainure intérieure (32) sont courbes, la première languette (21) d'étanchéité et la deuxième languette (22) d'étanchéité sont courbes dans une position de montage respectivement dans la première rainure intérieure (31) et dans la deuxième rainure intérieure (32) et ont un degré de liberté en flexion partant de leur position de montage en présence d'une pression d'air exercée de l'amont vers l'aval entre les faces (13a, 13b) de raccordement adjacentes des au moins deux secteurs (10) d'anneau adjacents lors du fonctionnement de la turbine,
la deuxième languette (22) d'étanchéité ayant au moins un deuxième point (220) se trouvant en contact avec au moins un premier point (213) de la première languette (21) d'étanchéité.

2. Ensemble (1) de turbine suivant la revendication 1, **caractérisé en ce que** le premier point (213) est intermédiaire entre deux premières extrémités (211, 212) de la première languette (21) d'étanchéité.

3. Ensemble (1) de turbine suivant la revendication 1, **caractérisé en ce que** le premier point (213) est situé en une première extrémité (211, 212) de la première languette (21) d'étanchéité.

4. Ensemble (1) de turbine suivant l'une quelconque des revendications 1 à 3, **caractérisé en ce que** le deuxième point (220) est intermédiaire entre deux deuxièmes extrémités (221, 222) de la deuxième languette (22) d'étanchéité.

5. Ensemble (1) de turbine suivant l'une quelconque des revendications 1 à 3, **caractérisé en ce que** le deuxième point (220) est situé à une deuxième extrémité (221) de la deuxième languette (22) d'étanchéité.

6. Ensemble (1) de turbine suivant la revendication 1, **caractérisé en ce que** le premier point (213) est intermédiaire entre deux premières extrémités (211, 212) de la première languette (21) d'étanchéité, le deuxième point (220) est intermédiaire entre deux deuxièmes extrémités (221, 222) de la deuxième languette (22) d'étanchéité, la deuxième languette (22) d'étanchéité étant tangente en ce deuxième point (220) et/ou en ce premier point (213) à la première languette (21) d'étanchéité.

7. Ensemble (1) de turbine suivant la revendication 6, **caractérisé en ce que** la première rainure intérieure (31) et la deuxième rainure intérieure (32) sont tangentes l'une à l'autre autour du premier point (213) et/ou autour du deuxième point (223).

8. Ensemble (1) de turbine suivant l'une quelconque des revendications précédentes, **caractérisé en ce que** la première languette (21) d'étanchéité comporte deux premières extrémités (211, 212), qui sont arrondies et qui ont une première épaisseur transversale (E211, E212) d'extrémité plus grande qu'une première épaisseur transversale intermédiaire (E214) d'une première partie intermédiaire (214) de la première languette (21) d'étanchéité, située entre les deux premières extrémités (211, 212),
et/ou la deuxième languette (22) d'étanchéité comporte deux deuxièmes extrémités (221, 222), qui sont arrondies et qui ont une deuxième épaisseur transversale (E221, E222) d'extrémité plus grande qu'une deuxième épaisseur transversale intermédiaire (E224) d'une deuxième partie intermédiaire (224) de la deuxième languette (22) d'étanchéité, située entre les deux deuxièmes extrémités (221,222).

9. Ensemble (1) de turbine suivant l'une quelconque des revendications précédentes, **caractérisé en ce que** la première languette (21) d'étanchéité et la deuxième languette (22) d'étanchéité sont précontraintes dans leur position de montage respectivement dans la première rainure intérieure (31) et dans la deuxième rainure intérieure (32).

10. Ensemble (1) de turbine suivant l'une quelconque des revendications précédentes, **caractérisé en ce que** la première rainure intérieure (31) débouche dans un premier côté amont (16) des secteurs (10) d'anneau et dans un premier côté aval (17) des secteurs (10) d'anneau en plus de déboucher dans leur face (13a, 13b) de raccordement, tandis que la deuxième rainure intérieure (32) débouche dans un deuxième côté (18) amont ou aval du rebord (12) des secteurs (10) d'anneau en plus de déboucher dans leur face (13a, 13b) de raccordement.

11. Ensemble de turbine suivant l'une quelconque des revendications précédentes, **caractérisé en ce que** la première languette (21) d'étanchéité présente un point (215) d'inflexion entre ses premières extrémités (211, 212) et/ou la deuxième languette (22) d'étanchéité présente un point d'inflexion entre ses deuxièmes extrémités (221, 222).

12. Ensemble de turbine suivant l'une quelconque des revendications précédentes, **caractérisé en ce que** la structure annulaire (400) fait partie d'un distributeur de turbine, la deuxième rainure intérieure (32) débouche dans une zone saillante aval (C, 18) d'appui circonférentiel du rebord (12) des secteurs (10) d'anneau en plus de déboucher dans leur face (13a, 13b) de raccordement,
l'ensemble de turbine comporte en outre une bride (120) de carter, qui est situé en aval de la zone saillante aval (C, 18) d'appui circonférentiel et contre lequel la zone saillante aval (C, 18) d'appui circonférentiel est en appui,
la bride (120) de carter comportant des secteurs (121) de bride disposés circonférentiellement bout à bout autour de de la direction axiale, appelés secteurs de bride adjacents, en face des secteurs (10) d'anneau,
au moins deux des secteurs (121) de bride adjacents comportant des deuxièmes faces de raccordement (121a, 121b) adjacentes, qui sont reliées par au moins une troisième languette (24) d'étanchéité, insérée dans une troisième rainure intérieure (34) des deuxièmes faces de raccordement (121a, 121b),
la troisième rainure intérieure (34) débouchant dans un côté amont (122) des deuxièmes faces de raccordement (121a, 121b) et étant située en face de la deuxième rainure intérieure (32) et en face de la zone saillante aval (C, 18) d'appui circonférentiel,
la deuxième languette (22) d'étanchéité comporte une deuxième extrémité (222) se trouvant en contact avec une troisième extrémité (241) de la troisième languette (24) d'étanchéité.

13. Ensemble (1) de turbine suivant la revendication 12, **caractérisé en ce que** la deuxième extrémité (222) dépasse en aval de la zone saillante aval (C, 18) d'appui circonférentiel et/ou la troisième extrémité (241) dépasse vers l'amont du côté amont (122) des deuxièmes faces de raccordement (121a, 121b).

## Patentansprüche

1. Turbinenanordnung (1), die eine ringförmige Struktur (400) umfasst, die sich umlaufend um eine axiale Richtung (DA) herum erstreckt, die von stromaufwärts nach stromabwärts verläuft, wobei die Turbinenanordnung eine Vielzahl von Ringsektoren (10) umfasst, die umlaufend aneinandergefügt angeordnet sind und die benachbarte Ringsektoren (10) genannt werden,
wobei jeder Ringsektor (10) mindestens eine Wand (11, 30), die sich von stromaufwärts nach stromabwärts erstreckt, und mindestens einen Rand (12, 42) umfasst, der von der Wand (11, 30) in einer Querrichtung (DT) hervorsteht, die in Bezug auf die axiale Richtung (DA) schneidend ist und die sich von der Wand (11, 30) entfernt,
wobei mindestens zwei benachbarte Ringsektoren (10) benachbarte Anschlussflächen (13a, 13b) umfassen, die durch mindestens eine erste Dichtungszunge (21), die in einer ersten Innennut (31) der Anschlussflächen (13a, 13b) eingesetzt ist, und durch mindestens eine zweite Dichtungszunge (22) verbunden sind, die in eine zweite Innennut (32) der Anschlussflächen (13a, 13b) eingesetzt ist, die an die erste Innennut (31) angeschlossen ist,
wobei die erste Dichtungszunge (21) sich von stromaufwärts nach stromabwärts über mindestens eine bestimmte axiale Länge (L21) in der Wand (11, 30) erstreckt und die zweite Dichtungszunge (22) sich in dem Rand (12, 42) erstreckt,
**dadurch gekennzeichnet, dass**
die erste Innennut (31) und die zweite Innennut (32) gekrümmt sind, wobei die erste Dichtungszunge (21) und die zweite Dichtungszunge (22) in einer Montageposition in der ersten Innennut (31) beziehungsweise in der zweiten Innennut (32) gekrümmt sind und bei Vorhandensein eines von stromaufwärts nach stromabwärts zwischen den benachbarten Anschlussflächen (13a, 13b) der mindestens zwei benachbarten Ringsektoren (10) beim Betrieb der Turbine ausgeübten Luftdrucks einen Biegefreiheitsgrad ausgehend von ihrer Montageposition aufweisen,
wobei die zweite Dichtungszunge (22) mindestens einen zweiten Punkt (220) aufweist, der sich mit mindestens einem ersten Punkt (213) der ersten Dichtungszunge (21) in Kontakt befindet.

2. Turbinenanordnung (1) nach Anspruch 1, **dadurch gekennzeichnet, dass** der erste Punkt (213) zwischen zwei ersten Enden (211, 212) der ersten Dichtungszunge (21) liegt.

3. Turbinenanordnung (1) nach Anspruch 1, **dadurch gekennzeichnet, dass** der erste Punkt (213) sich an einem ersten Ende (211, 212) der ersten Dichtungszunge (21) befindet.

4. Turbinenanordnung (1) nach einem der Ansprüche 1 bis 3, **dadurch gekennzeichnet, dass** der zweite Punkt (220) zwischen zwei zweiten Enden (221, 222) der zweiten Dichtungszunge (22) liegt.

5. Turbinenanordnung (1) nach einem der Ansprüche 1 bis 3, **dadurch gekennzeichnet, dass** der zweite Punkt (220) sich an einem zweiten Ende (221) der zweiten Dichtungszunge (22) befindet.

6. Turbinenanordnung (1) nach Anspruch 1, **dadurch gekennzeichnet, dass** der erste Punkt (213) zwischen zwei ersten Enden (211, 212) der ersten Dichtungszunge (21) liegt, wobei der zweite Punkt (220) zwischen zwei zweiten Enden (221, 222) der zweiten Dichtungszunge (22) liegt, wobei die zweite Dichtungszunge (22) an diesem zweiten Punkt (220) und/oder an diesem ersten Punkt (213) tangential zur ersten Dichtungszunge (21) ist.

7. Turbinenanordnung (1) nach Anspruch 6, **dadurch gekennzeichnet, dass** die erste Innennut (31) und die zweite Innennut (32) um den ersten Punkt (213) herum und/oder um den zweiten Punkt (223) herum tangential zueinander sind.

8. Turbinenanordnung (1) nach einem der vorhergehenden Ansprüche, **dadurch gekennzeichnet, dass** die erste Dichtungszunge (21) zwei erste Enden (211, 212) umfasst, die abgerundet sind und die eine erste Endquerdicke (E211, E212) aufweisen, die größer als eine erste Zwischenquerdicke (E214) eines ersten Zwischenteils (214) der ersten Dichtungszunge (21) ist, die sich zwischen den zwei ersten Enden (211, 212) befindet,
und/oder die zweite Dichtungszunge (22) zwei zweite Enden (221, 222) umfasst, die abgerundet sind und die eine zweite Endquerdicke (E221, E222) aufweisen, die größer als eine zweite Zwischenquerdicke (E224) eines zweiten Zwischenteils (224) der zweiten Dichtungszunge (22) ist, der sich zwischen den zwei zweiten Enden (221, 222) befindet.

9. Turbinenanordnung (1) nach einem der vorhergehenden Ansprüche, **dadurch gekennzeichnet, dass** die erste Dichtungszunge (21) und die zweite Dichtungszunge (22) in ihrer Montageposition in der ersten Innennut (31) beziehungsweise in der zweiten Innennut (32) vorgespannt sind.

10. Turbinenanordnung (1) nach einem der vorhergehenden Ansprüche, **dadurch gekennzeichnet, dass** die erste Innennut (31) in eine erste stromaufwärtige Seite (16) der Ringsektoren (10) und in eine erste stromabwärtige Seite (17) der Ringsektoren (10) mündet, zusätzlich dazu, dass sie in ihre Anschlussfläche (13a, 13b) mündet, während die zweite Innennut (32) in eine zweite stromaufwärtige oder stromabwärtige Seite (18) des Randes (12) der Ringsektoren (10) mündet, zusätzlich dazu, dass sie in ihre Anschlussfläche (13a, 13b) mündet.

11. Turbinenanordnung nach einem der vorhergehenden Ansprüche, **dadurch gekennzeichnet, dass** die erste Dichtungszunge (21) einen Inflexionspunkt (215) zwischen ihren ersten Enden (211, 212) aufweist und/oder die zweite Dichtungsnut (22) einen Inflexionspunkt zwischen ihren zweiten Enden (221, 222) aufweist.

12. Turbinenanordnung nach einem der vorhergehenden Ansprüche, **dadurch gekennzeichnet, dass** die ringförmige Struktur (400) Teil eines Turbinenleitrads ist, wobei die zweite Innennut (32) in eine umlaufende stromabwärtige hervorstehende Stützzone (C, 18) des Randes (12) der Ringsektoren (10) mündet, zusätzlich dazu, dass sie in ihrer Anschlussfläche (13a, 13b) mündet,
wobei die Turbinenanordnung ferner einen Gehäuseflansch (120) umfasst, der sich stromabwärts der umlaufenden stromabwärtigen hervorstehenden Stützzone (C, 18) befindet und gegen den sich die umlaufende stromabwärtige hervorstehende Stützzone (C, 18) in Auflage befindet,
wobei der Gehäuseflansch (120) den Ringsektoren (10) gegenüberliegend Flanschsektoren (121) umfasst, die umlaufend aneinandergefügt um die axiale Richtung herum angeordnet sind und die benachbarte Flanschsektoren genannt werden,
wobei mindestens zwei benachbarte Flanschsektoren (121) zweite benachbarte Anschlussflächen (121a, 121b) umfassen, die durch mindestens eine dritte Dichtungszunge (24) verbunden sind, die in eine dritte Innennut (34) der zweiten Anschlussflächen (121a, 121b) eingesetzt ist,
wobei die dritte Innennut (34) in eine stromaufwärtige Seite (122) der zweiten Anschlussflächen (121a, 121b) mündet und sich der zweiten Innennut (32) gegenüberliegend und der umlaufenden stromabwärtigen hervorstehenden Stützzone (C, 18) gegenüberliegend befindet,
wobei die zweite Dichtungszunge (22) ein zweites Ende (222) umfasst, das sich mit einem dritten Ende (241) der dritten Dichtungszunge (24) in Kontakt befindet.

13. Turbinenanordnung (1) nach Anspruch 12, **dadurch gekennzeichnet, dass** das zweite Ende (222) über die umlaufende stromabwärtige hervorstehende Stützzone (C, 18) stromabwärts übersteht und/oder das dritte Ende (241) von der stromaufwärtigen Seite (122) der zweiten Anschlussflächen (121a, 121b) nach stromaufwärts übersteht.

## Claims

1. A turbine assembly (1), comprising an annular structure (400) extending circumferentially around an axial direction (DA) from upstream to downstream and comprising a plurality of ring sectors (10) disposed circumferentially end-to-end, called adjacent ring sectors (10),
each ring sector (10) comprising at least one wall (11, 30) extending from upstream to downstream and at least one rim (12, 42), protruding from the wall (11, 30) in a transverse direction (DT), which is secant with respect to the axial direction (DA) and which moves away from the wall (11, 30),
at least two adjacent ring sectors (10) comprising adjacent connections faces (13a, 13b), which are linked by at least a first sealing tab (21), inserted into a first internal groove (31) of the connection faces (13a, 13b), and by at least a second sealing tab (22), inserted into a second internal groove (32) of the connection faces (13a, 13b), connected to the first internal groove (31),
the first sealing tab (21) extending from upstream to downstream on at least a determined axial length (L21) in the wall (11, 30) and the second sealing tab (22) extending into the rim (12, 42),
**characterized in that**
the first internal groove (31) and the second internal groove (32) are curved, the first sealing tab (21) and the second sealing tab (22) are curved in a mounting position respectively in the first internal groove (31) and in the second internal groove (32) and have a bending degree of freedom starting from their mounting position in the presence of an air pressure exerted from upstream to downstream between the adjacent connection faces (13a, 13b) of the at least two adjacent ring sectors (10) during operation of the turbine,
the second sealing tab (22) having at least a second point (220) which is in contact with at least a first point (213) of the first sealing tab (21).

2. The turbine assembly (1) according to claim 1, **characterized in that** the first point (213) is intermediate between two first ends (211, 212) of the first sealing tab (21).

3. The turbine assembly (1) according to claim 1, **characterized in that** the first point (213) is located at a first end (211, 212) of the first sealing tab (21).

4. The turbine assembly (1) according to any one of claims 1 to 3, **characterized in that** the second point (220) is intermediate between two second ends (221, 222) of the second sealing tab (22).

5. The turbine assembly (1) according to any one of claims 1 to 3, **characterized in that** the second point (220) is located at a second end (221) of the second sealing tab (22).

6. The turbine assembly (1) according to claim 1, **characterized in that** the first point (213) is intermediate between two first ends (211, 212) of the first sealing tab (21), the second point (220) is intermediate between two second ends (221, 222) of the second sealing tab (22), the second sealing tab (22) being tangent at this second point (220) and/or at this first point (213) to the first sealing tab (21).

7. The turbine assembly (1) according to claim 6, **characterized in that** the first internal groove (31) and the second internal groove (32) are tangent to each other around the first point (213) and/or around the second point (223).

8. The turbine assembly (1) according to any one of the preceding claims, **characterized in that** the first sealing tab (21) comprises two first ends (211, 212), which are rounded and which have a first transverse end thickness (E211, E212), which is greater than a first intermediate transverse thickness (E214) of a first intermediate portion (214) of the first sealing tab (21), located between the two first ends (211,212),
and/or the second sealing tab (22) comprises two second ends (221, 222), which are rounded and which have a second transverse end thickness (E221, E222) which is greater than a second intermediate transverse thickness (E224) of a second intermediate portion (224) of the second sealing tab (22), located between the two second ends (221, 222).

9. The turbine assembly (1) according to any one of the preceding claims, **characterized in that** the first sealing tab (21) and the second sealing tab (22) are prestressed in their mounting position respectively in the first internal groove (31) and in the second internal groove (32).

10. The turbine assembly (1) according to any one of the preceding claims, **characterized in that** the first internal groove (31) opens into a first upstream side (16) of the ring sectors (10) and in a first downstream side (17) of the ring sectors (10) in addition to opening into their connection face (13a, 13b), while the second internal groove (32) opens into a second upstream or downstream side (18) of the rim (12) of the ring sectors (10) in addition to opening into their connection face (13a, 13b).

11. The turbine assembly according to any one of the preceding claims, **characterized in that** the first sealing tab (21) has an inflection point (215) between its first ends (211, 212) and/or the second sealing tab (22) has an inflection point between its second ends (221, 222).

12. The turbine assembly according to any one of the preceding claims, **characterized in that** the annular structure (400) forms part of a turbine nozzle, the second internal groove (32) opens into a circumferential bearing downstream protruding area (C, 18) for circumferential bearing of the rim (12) of the ring sectors (10) in addition to opening into their connection face (13a, 13b),
the turbine assembly further comprises a casing flange (120), which is located downstream of the circumferentially bearing downstream protruding area (C, 18) and against which bears the circumferentially bearing downstream protruding area (C, 18),
the casing flange (120) comprising flange sectors (121) disposed circumferentially end-to-end around the axial direction, called adjacent flange sectors, facing the ring sectors (10),
at least two of the adjacent flange sectors (121) comprising second adjacent connection faces (121a, 121b), which are linked by least a third sealing tab (24), inserted in a third internal groove (34) of the second connection faces (121a, 121b),
the third internal groove (34) opening into an upstream side (122) of the second connection faces (121a, 121b) and being located facing the second internal groove (32) and facing the circumferentially bearing downstream protruding area (C, 18),
the second sealing tab (22) comprises a second end (222) in contact with a third end (241) of the third sealing tab (24).

13. The turbine assembly (1) according to claim 12, **characterized in that** the second end (222) projects downstream of the circumferentially bearing downstream protruding area (C, 18) and/or the third end (241) projects, towards the upstream, from the upstream side (122) of the second connection faces (121a, 121b).
